# EUROPEAN PATENT SPECIFICATION

(11) **EP 1 960 217 B1**
(45) Date of publication and mention of the grant of the patent: **10.08.2011**
(21) Application number: 06841318.6
(22) Date of filing: 11.12.2006
(51) Int. Cl.: B60B 33/00, A47B 91/02

(54) **A HOUSEHOLD APPLIANCE**
HAUSHALTSGERÄT
APPAREIL ELECTROMENAGER

(30) Priority: 14.12.2005 TR 200505014
(43) Date of publication of application: 27.08.2008
(73) Proprietor: Arçelik Anonim Sirketi, 34950 Istanbul (TR)
(72) Inventor: YAVUZ, Nihat, 34950 Istanbul (TR); SIMSIR, Bogac, 34950 Istanbul (TR); DURMAZ, Mehmet, 34950 Istanbul (TR); GUNDUZ, Nihat, 34950 Istanbul (TR); OZYAKA, Isik, 34950 Istanbul (TR)
(86) International application number: PCT/EP2006/069506
(87) International publication number: WO 2007/068665

(56) References cited:
- DE-A1- 4 028 599
- GB-A- 2 323 276
- JP-A- 10 102 884
- JP-A- 10 169 293

## Description

The present invention relates to a household appliance, the height of which can be adjusted according to the floor it is emplaced on.

The irregularities of the floors on which household appliances such as cooling device, washing machine, dryer, dishwasher, oven etc. will be emplaced results in the household appliance deviating from a balance position and the creation of various adversities. Therefore, it is of utmost importance that the household appliance keeps its position of balance during functioning.

Usually four legs are assembled to the base of the household appliances to have them seated on the floor. Some of these legs have wheels for moving or carrying the household appliances easily. The height of the legs can be adjusted such that the household appliance is balanced with all of its legs seated on the floor. Accordingly, the unbalancing of the household appliance by the irregularities of the floor is prevented.

In the state of the art, various mechanisms have been designed for adjusting the legs of the household appliances.

In state-of-the-art Great Britain Patent Application no. GB2323276, a domestic appliance, e.g. a cooker, having a height adjuster mechanism is explained wherein the user can adjust the height of a rear wheel from a remote position.

In state-of-the-art German Patent Application no. DE4028599, an appliance, particularly a dishwasher is explained, the level of which can be adjusted by rotating a cam wheel.

The object of the present invention is the realization of a height adjustable household appliance, for balancing its position on the floor it is emplaced.

The household appliance realized in order to fulfill the objectives of the present invention, explicated in the first claim and other dependent claims, comprises at least two wheels providing it to stand on the floor it is emplaced and to be moved when desired, and a rod to which each wheel is fixed, forming the rotational axis of the wheel by being inserted in its center, and a cam surface on the body, having a inclination direction, wherein the rod is housed, providing the rod to slide freely together with the wheel on the body and to stop the wheel at the desired point for adjusting the height by means of the force applied by the user. The rod supports the weight of the body since it bears on the cam surface. Therefore the motion of the rod along the cam surface provides the adjustment of the distance between the wheel and the body. In this embodiment, while the cam surface that houses the rod is stationary, the rod moves in the cam surface.

In an alternative embodiment of the present invention, the end of the motion transmitter is not directly assembled on the rod but assembled on the intermediary element wherein the cam surface housing the rod is situated. In this embodiment, instead of the rod, the intermediary element and thus the cam surface moves. Accordingly a direct force is not applied on the rod. In this embodiment of the present invention, the cam surface moves according to the rod since the intermediary element is moving. The intermediary element makes a sliding movement under the body in preferably horizontal direction.

By way of the present invention the wheel height adjustments can be easily made by the user without changing the position of the household appliance.

The household appliance realized in order to fulfill the objectives of the present invention is illustrated in the attached figures, where:

figure 1 - is the general view of a household appliance.

Figure 2 - is the general view of a wheel and a body.

Figure 3 - is the sideways sectional view of the body in level H1.

Figure 4 - is the sideways sectional view of the body in level H2.

Figure 5 - is the top perspective view of the wheel case wherein the wheel is assembled.

Figure 6 - is the bottom perspective view of the wheel case wherein the wheel is assembled.

Figure 7 - is the sideways general view of the body in level H1 in another embodiment of the present invention.

Figure 8 - is the sideways sectional view of the body in level H1 in this embodiment of the present invention.

Figure 9 - is the sideways general view of the body in level H2 in another embodiment of the present invention.

Figure 10 - is the sideways sectional view of the body in H2 level in this embodiment of the present invention.

Figure 11 - is the top perspective view of the wheel case in this embodiment of the present invention.

Figure 12 - is the bottom perspective view of the wheel case in this embodiment of the present invention.

The elements shown in figures are numbered as follows:
- 2.: 1. Household appliance Body
- 3.: Wheel
- 4.: Rod
- 5.: Motion transmitter
- 6.: Cam surface
- 7.: Intermediary element
- 8.: Guide
- 9.: Wheel case
- 10.: Rail

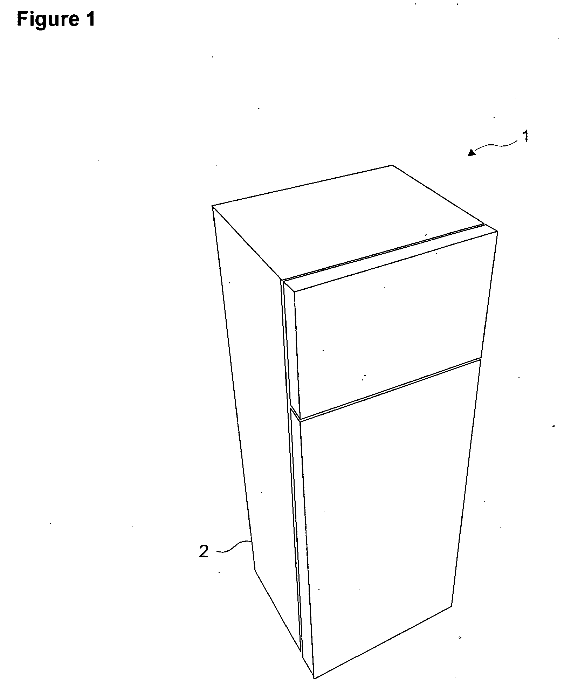

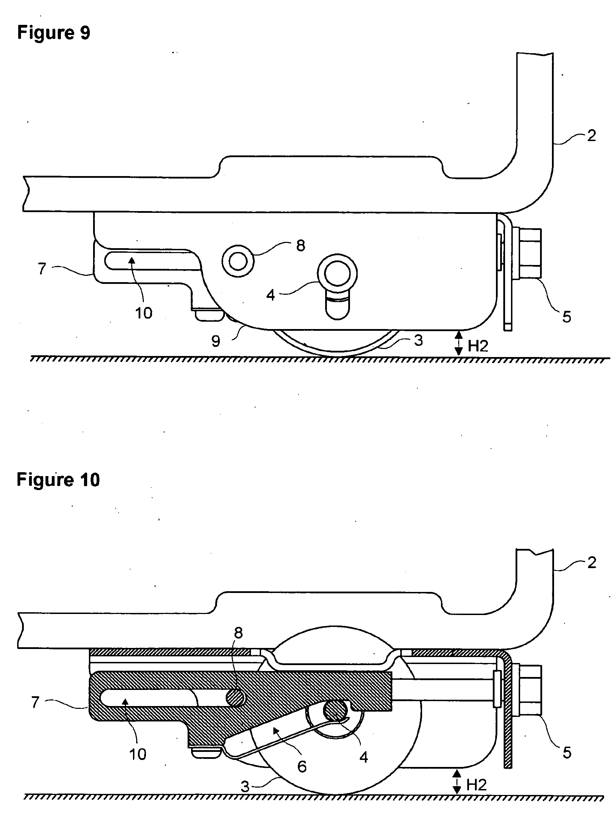

The household appliance (1) of the present invention comprises a body (2), at least one wheel (3) situated on the base of the body (2), providing the body (2) to stand on the floor it is emplaced and a rod (4) to which the wheel (3) is mounted, forming the rotational axis of the wheel (3) by passing through its center, and a cam surface (6),
- housing the rod (4),
- inclined,
- on which the rod (4) moves by bearing on it or moving by bearing on the rod (4), changing position with respect to the rod (4) and a motion transmitter (5) providing the rod (4) and the cam surface (6) to move with respect to each • other by transmitting the force applied by the user and allowing the height adjustment of the body (2) to be made (Figure 1, Figure 2, Figure 3, Figure 4, Figure 8 and Figure 10).

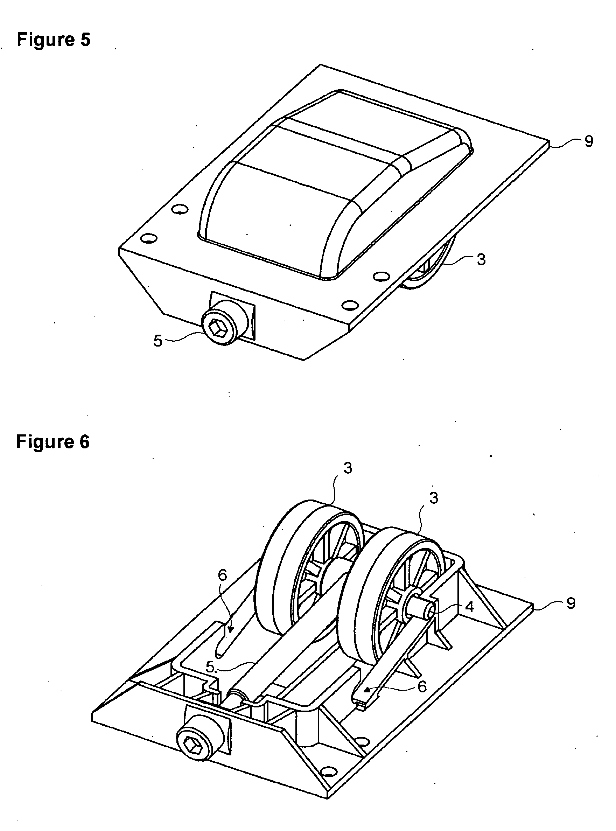

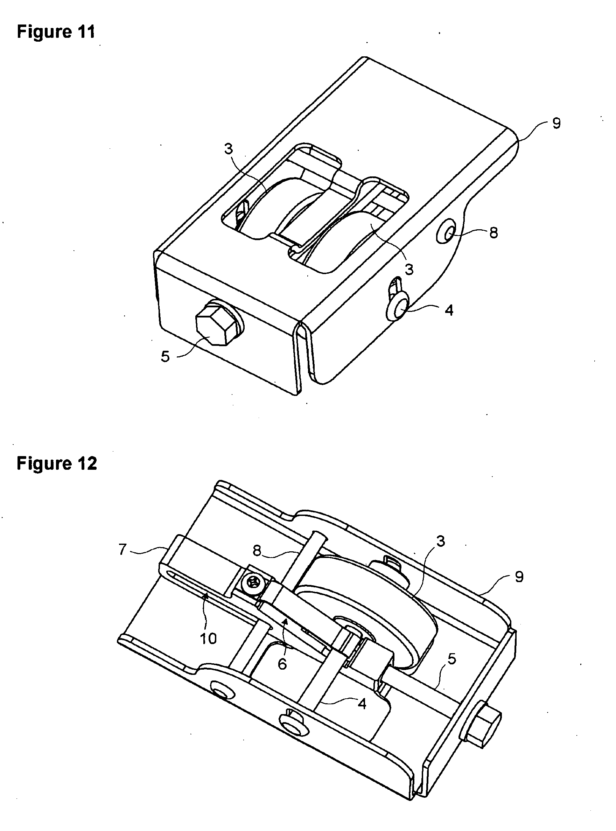

In this embodiment of the present invention, the household appliance (1) comprises a wheel case (9) in which the wheel (3) and the rod (4) are situated, having lateral walls that surround the wheel (3) from both sides to prevent the impacts on the wheel (3) that may be effected from the exterior surrounding and supporting the weight of the body (2) by being in contact with the body (2). In this embodiment, the cam surface (6) is situated on the wheel case (9) (Figure 5, Figure 6, Figure 7, Figure 9, Figure 11 and Figure 12).

In this embodiment of the present invention, the rod (4) supports the body (2) by being in contact with the cam surface (6). The rod (4) comprises a screw hole through which the motion transmitter (5) is inserted, having screw threads on the inner surface. The rod (4) moves along the cam surface (6) by means of the force applied on the motion transmitter (5) by the user, changing its point of stand on the cam surface (6) and the distance between the wheel (3) and the body (2) and thus the height of the household appliance (1) is adjusted.

The proximal end of the motion transmitter (5) extends to a point, preferably to the front of the household appliance (1) where the user can easily access. The motion transmitter (5) comprises screw threads formed on its lateral surface contacting the rod (4), matching the screw threads on the rod (4). The distal end of the motion transmitter (5) having screw threads is fixed to the screw hole on the rod (4). When force is applied to the proximal end of the motion transmitter (5) by the user, this force is transmitted to the distal end of the motion transmitter (5) and hence to the rod (4). Consequently the rod (4) moves along the cam surface (6).

The cam surface (6) serves like a guide for directing the motion of the rod (4) by the effect of the force applied via the motion transmitter (5) on the rod (4). The inclined cam surface (4) provides the body (2) to move in the vertical axis while the wheel (3) moves in the horizontal axis and to change the distance between the wheel (3) and the body (2) as a result of this movement in the vertical axis.

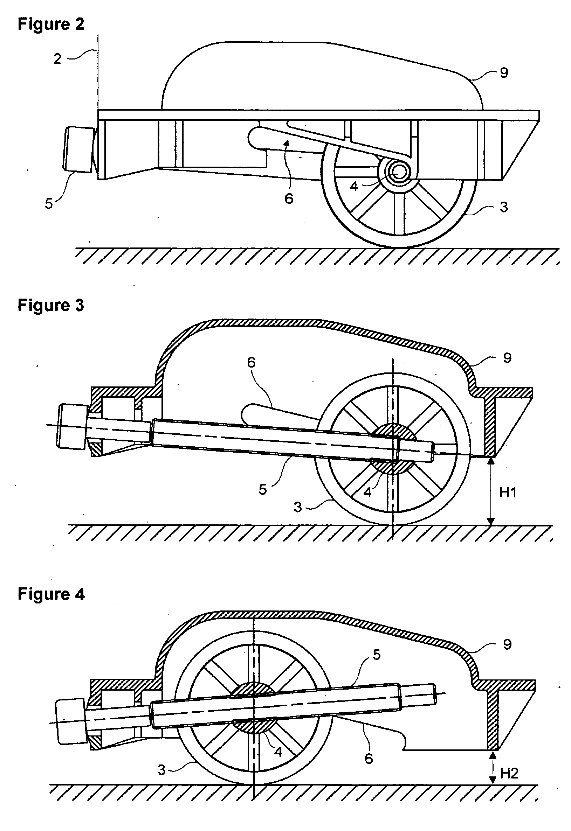

In this embodiment, the force applied by the motion transmitter (5) is exerted only on the wheel (3) fixed to the rod (4) and the rod (4) can move with respect to the body (2) (Figure 2, Figure 3, Figure 4, Figure 5 and Figure 6).

In this embodiment of the present invention, the motion transmitter (5) is rotated about its axis with the force applied by the user to the proximal end of the motion transmitter (5) extending to the front of the household appliance (1). By this rotational movement, the distal end of the motion transmitter (5) assembled to the rod (4) also rotates and by means of the screw threads on the distal end fitting into the screw threads on the rod (4) the rotational movement of the motion transmitter (5) about its axis is transmitted to the rod (4) as a linear movement and the rod (4) moves along the cam surface (6) forwards or backwards depending on the rotational direction of the motion transmitter (5). The cam surface (6) having an inclined surface provides the body (2) to move in the vertical direction such that it is raised or lowered. When the rod (4) reaches the desired point on the cam surface (6), the force applied on the motion transmitter (5) is terminated and the movement of the rod (4) on the cam surface (6) ends. By means of the screw threads on the contacting surfaces of the rod (4) and the motion transmitter (5), the rod (4) is provided to stop at the moment the applied force is terminated. The point where the user exerts force on the motion transmitter (5) has a configuration allowing the user to apply force manually or by means of a tool. Consequently by this embodiment, the user can adjust the height of the household appliance (1) by changing the distance between the wheel (3) and the body (2) without making any changes in the present position of the household appliance (1). This height adjustment process can be applied to all the wheels (3) of the household appliance (1).

In this embodiment of the present invention, the cam surface (6) partially or entirely surrounds the rod (4).

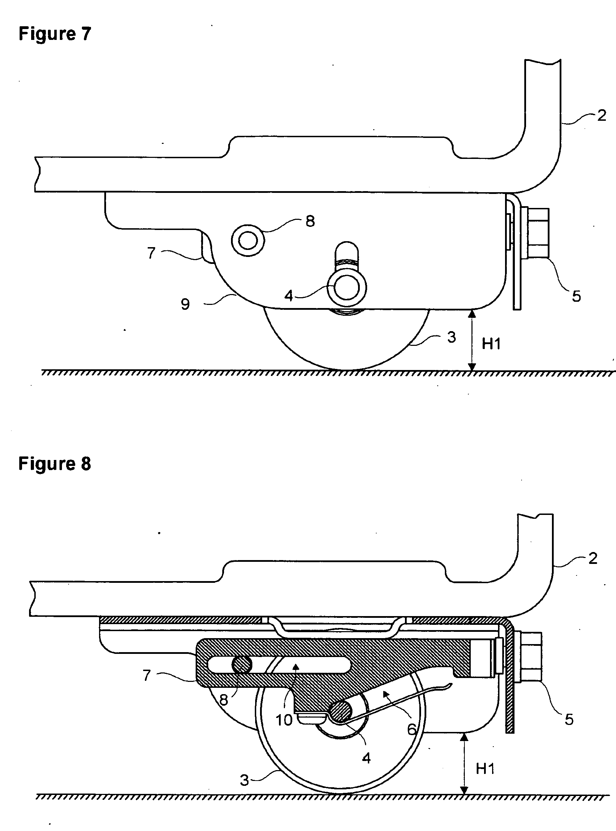

In another embodiment of the present invention, the household appliance (1) comprises an intermediary element (7) emplaced in the wheel case (9) to which one end of the motion transmitter (5) is assembled and moved with the force exerted on the motion transmitter (5) by the user. In this embodiment, the cam surface (6) is situated on the intermediary element (7). The intermediary element (7) moves in the horizontal direction with the force applied on the intermediary element (7) by the motion transmitter (5) and the point to which the rod (4) contacts on the cam surface (6) changes. Accordingly the height adjustment of the household appliance (1) can be made by changing the distance between the wheel (3) and the body (2). In this embodiment, the force exerted by the motion transmitter (5) is directly applied only on the intermediary element (7) and the cam surface (6) on the intermediary element (7) moves in accordance with the rod (4) (Figure 7, Figure 8, Figure 9, Figure 10, Figure 11 and Figure 12).

In this embodiment of the present invention, the household appliance (1) comprises a guide (8) and a rail (10), one of them situated on the wheel case (9) and the other on the intermediary element (7), providing the intermediary element (7) to be conveyed and also to move in a balanced way in the wheel case (9), preferably in the horizontal direction. In this embodiment, the guide (8) is in the shape of a pin, situated on the wheel case (9) providing to keep the lateral walls of the wheel case (9) equidistant by holding them together, parallel to each other. The rail (10) is in the shape of a housing situated on the intermediary element (7) wherein the guide (8) is housed and preferably extending in the horizontal direction. The intermediary element (7) is not fixed anywhere but moves in the wheel case (9) by means of the rod (4) and the guide (8) moving on the cam surface (6) and in the rail (10). By means of this intermediary element (7), the force transmitted by the motion transmitter (5) is not directly applied on the rod (4) and a more rigid configuration is attained.

In this embodiment of the present invention, the force exerted by the motion transmitter (5) is applied by means of the intermediary element (7) instead of being directly applied on the rod (4). Accordingly the cam surface (6) moves in accordance with the rod (4) and the height adjustment of the household appliance (1) can be made by changing the distance between the wheel (3) and the body (2).

By way of the present invention, the user is enabled to make the height adjustment of the household appliance (1) by changing the distance between the wheel (3) and the body (2).

## Claims

1. A household appliance (1) comprising a body (2), at least one wheel (3) situated on the base of the body (2), providing the body (2) to stand on the floor it is emplaced and a rod (4) to which each wheel (3) is mounted, forming the rotational axis of the wheel (3) by passing through its center, and **characterized by** a cam surface (6), housing the rod (4), inclined, on which the rod (4) moves by bearing on it or moving by bearing on the rod (4), changing position with respect to the rod (4) and a motion transmitter (5) providing the rod (4) and the cam surface (6) to move with respect to each other by transmitting the force applied by the user and allowing the height adjustment of the body (2) to be made.

2. A household appliance (1) as in Claim 1, **characterized by** a cam surface (6) that partially or entirely surrounds the rod (4).

3. A household appliance (1) as in Claim 1, **characterized by** a rod (4) having a screw hole with screw threads on the inner surface, through which the motion transmitter (5) passes and a motion transmitter (5) having screw threads formed along its lateral surface contacting the rod (4), matching the screw threads on the rod (4).

4. A household appliance (1) as in Claim 1, **characterized by** a wheel case (9), on which the cam surface (6) is situated, into which the wheel (3) and the rod (4) are emplaced, having lateral walls that surround the wheel (3) from both sides to prevent the impacts on the wheel (3) that may come from the exterior surrounding and supporting the weight of the body (2) by being in contact with the body (2).

5. A household appliance (1) as in Claim 4, **characterized by** an intermediary element (7) emplaced in the wheel case (9), to which one end of the motion transmitter (5) is assembled and moved with the force exerted by the user on the motion transmitter (5).

6. A household appliance (1) as in Claim 5, **characterized by** a guide (8) and a rail (10), one of them situated on the wheel case (9) and the other on the intermediary element (7), providing the intermediary element (7) to be conveyed and also to move in a balanced way in the wheel case (9).

7. A household appliance (1) as in Claim 6, **characterized by** a guide (8) in the shape of a pin, situated on the wheel case (9) providing to keep the lateral walls of the wheel case (9) equidistant by holding them together, parallel to each other.

8. A household appliance (1) as in Claim 6, **characterized by** a rail (10) in the shape of a housing situated on the intermediary element (7) in which the guide (8) is housed.

## Patentansprüche

1. Haushaltsgerät (1), umfassend ein Gehäuse (2), wenigstens ein Rad (3), das an der Basis des Gehäuses (2) angeordnet ist und dafür sorgt, dass das Gehäuse (2) auf dem Boden steht, auf dem es aufgestellt wird, und eine Stange (4), an der jeweils ein Rad (3) befestigt ist, und die die Drehachse des Rades (3) bildet, indem sie durch seine Mitte verläuft, und **gekennzeichnet durch** eine Nockenfläche (6), die geneigt die Stange (4) aufnimmt und an der sich die Stange (4) bewegt, während sie darauf abgestützt ist, oder die sich bewegt, während sie an der Stange (4) abgestützt ist, und ihre Position in Bezug auf die Stange (4) verändert, und eine Bewegungsübertragungsvorrichtung (5), die dafür sorgt, dass sich die Stange (4) und die Nockenfläche (6) im Verhältnis zueinander bewegen, indem sie die Kraft überträgt, die vom Benutzer ausgeübt wird, und eine Höheneinstellung des Gehäuses (2) ermöglicht.

2. Haushaltsgerät (1) nach Anspruch 1, **gekennzeichnet durch** eine Nockenfläche (6), die die Stange (4) teilweise oder ganz umgibt.

3. Haushaltsgerät (1) nach Anspruch 1, **gekennzeichnet durch** eine Stange (4) hat einen Schrauböffnung mit einem Schraubgewinde an der Innenfläche, **durch** die die Bewegungsübertragungsvorrichtung (5) verläuft, und eine Bewegungsübertragungsvorrichtung (5), an deren Seitenfläche, die in Kontakt mit der Stange (4) gelangt, ein Schraubgewinde ausgebildet ist, das dem Schraubgewinde an der Stange (4) entspricht.

4. Haushaltsgerät (1) nach Anspruch 1, **gekennzeichnet durch** einen Radkasten (9), an dem die Nockenfläche (6) angeordnet ist, und in dem das Rad (3) und die Stange (4) untergebracht sind, und der Seitenwände aufweist, die das Rad (3) auf beiden Seiten umgeben, um auf das Rad (3) einwirkende Stöße zu verhindern, die von der äußeren Umgebung kommen können, und das Gewicht des Gehäuses (2) zu tragen, indem er mit dem Gehäuse (2) in Kontakt steht.

5. Haushaltsgerät (1) nach Anspruch 4, **gekennzeichnet durch** ein Zwischenelement (7), das im Radkasten (9) untergebracht ist, und an dem ein Ende der Bewegungsübertragungsvorrichtung (5) angebracht ist, und das **durch** die Kraft, die der Benutzer auf die Bewegungsübertragungsvorrichtung (5) ausübt, bewegt wird.

6. Haushaltsgerät (1) nach Anspruch 5, **gekennzeichnet durch** eine Führung (8) und eine Schiene (10), von denen eine am Radkasten (9) und die andere am Zwischenelement (7) angeordnet ist, und die dafür sorgen, dass das Zwischenelement (7) verschoben wird und sich auf ausbalancierte Weise im Radkasten (9) bewegt.

7. Haushaltsgerät (1) nach Anspruch 6, **gekennzeichnet durch** eine Führung (8) in der Form eines Stifts, der am Radkasten (9) angeordnet ist und dafür sorgt, dass die Seitenwände des Radkastens (9) einen gleichmäßigen Abstand beibehalten, indem er diese parallel zueinander zusammenhält.

8. Haushaltsgerät (1) nach Anspruch 6, **gekennzeichnet durch** eine Schiene (10) in der Form eines Gehäuses, die am Zwischenelement (7) angeordnet ist und in der die Führung (8) untergebracht ist.

## Revendications

1. Un électroménager (1) comprenant un corps (2), au moins une roue (3) située sur la base du corps (2), permettant au corps (2) de se tenir sur le sol sur lequel il est placé et un axe (4) auquel chaque roue (3) est montée, formant l'axe de rotation de la roue (3) en passant à travers de son centre, et **caractérisé par** une surface de came inclinée (6), qui abrite l'axe (4), sur laquelle l'axe (4) se déplace en s'appuyant sur elle ou qui se déplace en s'appuyant sur l'axe (4), en changeant sa position par rapport à l'axe (4) et un transmetteur de mouvement (5) permettant à l'axe (4) et la came (6) de se déplacer les uns par rapport aux autres en transmettant la force appliquée par l'utilisateur et permettant la hauteur du corps (2) d'être mesurée.

2. Un électroménager (1) selon la Revendication 1, **caractérisé par** une surface de came (6) qui entoure partiellement ou entièrement l'axe (4).

3. Un électroménager (1) selon la Revendication 1, **caractérisé par** un axe (4) ayant un trou de vis taraudé, à travers lequel le transmetteur de mouvement (5) passe et un transmetteur de mouvement (5) ayant un filetage formé le long de sa surface latérale qui est en contact avec l'axe (4), correspondant au taraudage sur l'axe (4).

4. Un électroménager (1) selon la Revendication 1, **caractérisé par** une boîte de roue (9) sur laquelle la surface de came (6) est située, dans laquelle la roue (3) et l'axe (4) sont placés, ayant les parois latérales qui entourent la roue (3) de deux côtés pour éviter les impacts sur la roue (3) qui peuvent provenir de l'extérieur et qui supporte le poids du corps (2) en étant en contact avec le corps (2).

5. Un électroménager (1) selon la Revendication 4, **caractérisé par** un élément intermédiaire (7) placé dans la boîte de roue (9), auquel une extrémité du transmetteur de mouvement (5) est montée et qui se déplace avec la force appliquée par l'utilisateur sur le transmetteur de mouvement (5).

6. Un électroménager (1) selon la Revendication 5, **caractérisé par** un guide (8) et un rail (10), l'un de ceux-ci situé sur la boîte de roue (9) et l'autre sur l'élément intermédiaire (7), permettant à l'élément intermédiaire (7) d'être transporté et de se déplacer de façon équilibrée dans la boîte de roue (9).

7. Un électroménager (1) selon la Revendication 6, **caractérisé par** un guide (8) sous la forme d'une goupille, situé sur la boîte de roue (9) permettant de garder les parois latérales de la boîte de roue (9) équidistants en les tenant ensemble et parallèle les uns aux autres.

8. Un électroménager (1) selon la Revendication 6, **caractérisé par** un rail (10) sous la forme d'un logement situé sur l'élément intermédiaire (7) dans lequel le guide (8) est logé.
